# Europäisches Patentamt

# European Patent Office

# Office européen des brevets

(19)

(11) Veröffentlichungsnummer: **0 074 648**
**B1**

(12) **EUROPÄISCHE PATENTSCHRIFT**

(45) Veröffentlichungstag der Patentschrift:
23.07.86

(51) Int. Cl.⁴: **B 65 G 21/02**, B 65 G 21/20

(21) Anmeldenummer: **82108402.7**

(22) Anmeldetag: **11.09.82**

(54) **Rahmen für Bandfördervorrichtungen.**

(30) Priorität: **11.09.81 DE 8126440 U**

(43) Veröffentlichungstag der Anmeldung:
**23.03.83 Patentblatt 83/12**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**DE-A-2 815 351**
**DE-U-7 503 847**
**FR-A-1 131 443**
**FR-A-2 061 511**
**US-A-3 605 994**
**US-A-4 232 774**

(73) Patentinhaber: **Geppert, Helmut, Niederfeld 12,
D-5162 Niederzier- Krauthausen (DE)**

(72) Erfinder: **Geppert, Helmut, Niederfeld 12, D-5162
Niederzier- Krauthausen (DE)**

(74) Vertreter: **Kantner, Hans- Joachim, Dipl.- Ing.,
Darmstädter Strasse 8, D-6070 Langen (DE)**

EP 0 074 648 B1

## Beschreibung

Die Erfindung betrifft einen aus durch Verschraubungen zusammengehaltenen Längsholmen und Querstreben gebildeten Rahmen für Bandfördervorrichtungen, dessen Längsholme jeweils als zur Bandmitte offene Profile etwa C-förmigen Querschnitts mit einem Bodensteg und mit sich von dessen beiden Seiten weg erstreckenden Seitenstegen ausgebildet sind und Aufnahmen für das Förderband bilden.

Ein Rahmen dieser Art ist aus der DE-U 75 03 847 bekannt. Bei dieser bekannten Anordnung sind die Seitenstege randflanschlos. Um hier einen Rahmen ausreichender Biege-, Torsions- und Knicksicherheit zu erhalten, müssen entweder die Längsholme mit einer ausreichenden Wanddicke ausgeführt werden oder aber durch ihre einander gegenüberliegenden Seitenstege jeweils miteinander verbindende Wannenprofile miteinander verbunden sein, so daß sich ein als Kastenprofil wirkender Gesamtquerschnitt ergibt. Hierdurch ergibt sich jedoch ein nicht unbeträchtlicher Aufwand, der ungünstig auf die Gestehungskosten durchschlägt. Hinzu kommt, daß der Innenraum des Tragrahmens, in welchem das Untertrum des Fördermittels läuft, hier nicht von der Uhterseite her zugänglich ist, was in vielen Fällen ebenfalls unerwünscht ist.

Die US-A 26 05 994 zeigt zwar einen Rahmen für eine Bandfördervorrichtung mit Rahmenlängsholmen etwa C-förmigen Querschnitts, deren obere Seitenstege nach unten gerichtete Randflansche aufweisen. Die unteren Seitenstege sind jedoch randflanschlos ausgeführt und durch eine über die ganze Rahmenlänge durchgehende Abdeckplatte miteinander verbunden. Parallel zur Abdeckplatte sind ebenfalls über die ganze Rahmenlänge durchgehende Aussteifungsprofile vorgesehen, durch welche die Längsholme zusammengehalten werden. Auch hierbei ergibt sich daher praktisch eine kastenförmige Tragrahmenkonstruktion mit den weiter oben angegebenen Nachteilen.

Die US-A 42 32 774 zeigt zwar einen Rahmen für eine Bandfördervorrichtung, dessen im Querschnitt etwa C-förmige Längsholme mit an ihre Seitenstege angesetzten, zueinander gerichteten Randflanschen versehen sind. Diese Seitenstege dienen hierbei jedoch nicht als Bandabstützung. Dasselbe gilt für den aus der DE-A 28 15 351 bekannten Rahmen, dessen Längsholme etwa C-förmigen Querschnitt, jedoch mit eingebautem Bodensteg und ungleich langen Seitenstegen ausgeführt sind, wobei die Länge des kürzeren Seitenstegs der Einbauchung des Bodenstegs entsprechen soll. Tragrahmen solcher Ausführung sind unabhängig davon, daß sie aufgrund ihres vergleichsweise komplizierten Profilquerschnitts einen nicht unerheblichen Aufwand für die Herstellung der Profile selbst und damit einhergehend die Gestehungskosten des Rahmens bedingen, nicht dazu geeignet, gleichzeitig als Aufnahmeführung für das Untertrum des Fördermittels zu dienen.

Hiervon ausgehend ist es daher die Aufgabe der vorliegenden Erfindung, die Möglichkeit zu schaffen, einen Rahm men eingangs erwähnter Art nicht nur als Leichtbaurahmen ausführen zu können, und zwar unter Einhaltung einer möglichst großen Förderbreite bezogen auf die Rahmenbreite, sondern auch sicherzustellen, daß sich eine Universalrahmenausführung für Bandfördervorrichtungen jeglicher Förderbandausführung ergibt.

Diese Aufgabe wird erfindungsgemäß dadurch gelöst, daß die Seitenstege jeweils zueinander gerichtete Randflansche aufweisen, wobei die unteren Randflansche je eine horizontale, zur Bandmitte gerichtete Verlängerung aufweisen, und daß diese Verlängerungen voneinander beabstandet und unverbunden sind, wodurch das Untertrum von unten über die gesamte Rahmenlänge frei zugänglich ist.

Der mit diesen Maßnahmen erzielbare technische Fortschritt ist insbesondere in der Vermeidung der Nachteile der bekannten Anordnungen zu sehen. Bei gleicher Außenabmessung und gleicher Wandstärke ergeben sich beim erfindungsgemäßen Rahmen in vorteilhafter Weise eine vergleichsweise hohe mechanische Widerstandsfähigkeit sowohl gegen Biege- und Torsionsbeanspruchung als auch gegen Ausknicken in der Förderbandebene, was bei vorgegebener Beanspruchung eine nicht unbeträchtliche Verringerung der Wandstärke und damit eine nicht unbeträchtliche Gewichts- und Kosteneinsparung erzielen läßt und somit positiv auf die Gestehungskosten durchschlägt. Infolge der durch die erfindungsgemäßen Maßnahmen gewährleisteten hohen Biege- und Torsionssicherheit und insbesondere der hohen Knicksicherheit ermöglichen die erfindungsgemäßen Maßnahmen in vorteilnafter Weise auch eine Nachrüstung eines an sich für Betrieb mit elastisch biegsamem Förderband konzipierten und entsprechend in extremer Leichtbauweise ausgeführten Rahmens durch eine oder mehrere Scharnier- oder Plattenbandketten.

In vorteilhafter Ausgestaltung der übergeordneten Maßnahmen kann die zur Bandmitte gerichtete Verlängerung des unteren Randflansches durch eine Abkröpfung desselben gebildet sein. Diese Maßnahmen ergeben eine einteilige, durch Abkanten oder Walzen auf einfache Weise herstellbare Profilausführung.

Eine andere Ausführung kann darin bestehen, daß die zur Bandmitte gerichtete Verlängerung des unteren Randflansches durch eine an diesem lösbar festlegbare Führungsleiste gebildet wird. Hierbei ist es in vorteilhafter Weise möglich, einfache C-Profile nachträglich mit der erfindungsgemäßen, zur Bandmitte gerichteten Verlängerung zu versehen.

Eine weitere vorteilhafte Maßnahme kann darin bestehen, daß die Randflansche jeweils zum zugehörigen Bodensteg hin geneigt sind. Diese Maßnahmen können eine Erweiterung der frei zugänglichen Förderbreite oder eine Verringerung der Rahmengesamtbreite ergeben, wodurch sich die konstruktive Freizügigkeit erhöht.

Weitere zweckmäßige Ausgestaltungen und vorteilhafte Fortbildungen der übergeordneten Maßnahmen sind in den restlichen Unteransprüchen gekennzeichnet.

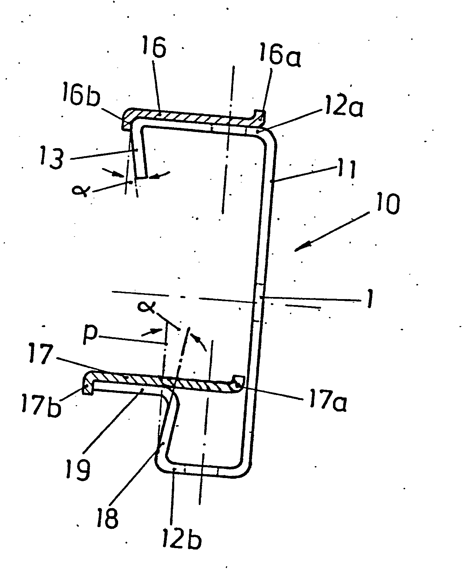

Nachstehend wird ein Ausführungsbeispiel der Erfindung anhand der Zeichnung näher erläutert. Die Zeichnung zeigt eine Stirnansicht eines erfindungsgemäßen Längsholms mit geschnittenen Gleitleisten.

Mit 10 ist der gesamte, durch ein C-Profil gebildete Holmquerschnitt bezeichnet. Dieses C-Profil weist einen ebenen Bodensteg 11 und an dessen Enden von diesem jeweils etwa flächennormal, d. h. zur Bandmitte, sich wegerstreckende Seitenstege 12a und 12b auf. Der oben liegende Seitensteg 12a geht in einen auf den unten liegenden Seitensteg 12b zu gerichteten Randflansch 13 über. Der unten liegende Seitensteg 12b weist einen sich in Richtung des oben liegenden Seitensteg 12a erstreckenden Randflansch 18 auf. Der äußere Randbereich dieses Randflansches 18 des unten liegenden Seitenstegs 12b setzt sich etwa normal zum Bodensteg 11, d. h. zur Bandmitte hin, in eine hier durch eine einfache Abkantung bzw. Abkröpfung gebildete Verläßerung 19 fort.

Die Randflansche 13 bzw. 18 können sich etwa parallel zum ebenen Bodensteg 11 erstrecken. Bevorzugt wird jedoch, wenn diese Randflansche 13 bzw. 18 mit einem gewissen Neigungswinkel α gegenüber einer Parallelen zum Bodensteg 11 auf diesen zu verlaufen. Der Neigungswinkel α kann dabei bis zu 30° betragen.

Anders als dargestellt, könnte die den Randflansch 18 des unten liegenden Seitenstegs 12b zur Bandmitte hin fortsetzende Verlängerung 19 auch als lösbar am zugeordneten Randflansch 18 festlegbare Führungsleiste ausgebildet sein. Die Mittel für die lösbare Halterung einer solchen Führungsleiste könnten dabei höchst einfach beispielsweise als Schraub- oder Klemmeinrichtung ausgebildet sein. Eine solche Ausführung mit lösbar am Randflansch 18 festlegbarer Führungsleiste bietet den Vorteil, bekannte C-Profile benutzen zu können, bei denen der unten liegende Seitensteg 12b in gleicher Weise wie der oben liegende Seitensteg 12a mit einem Randflansch ausgeführt ist. Eine solche Ausführung bietet ersichtlich den weiteren Vorteil, solche vorhandenen C-Profile nicht nur für die Erfindung überhaupt nutzen zu können, sondern sie auch ohne Rücksicht auf Seitenlage sowohl als rechten als auch als linken Rahmenlängsholm einsetzen zu können.

Die Laufflächen des oben liegenden Seitenstegs 12a und der Verlängerung 19 des unteren Randflansches 18 können jeweils mit einer Gleitleiste 16 bzw. 17 bestückt sein, die bevorzugt aus Kunststoffmaterial gebildet ist, und zwar bevorzugt aus Polytetrafluoräthylen. Die bevorzugten Ausführungen solcher Gleitleisten 16 bzw. 17 weisen jeweils einen von ihrem bodenstegnahen Ende hochstehenden Führungssteg 16a bzw. 17a auf, an dem erforderlichenfalls einmal das eine oder andere Glied des Scharnier- oder Plattenkettenbandes anlaufen kann, sowie einen das andere Ende jeweils verlängernden, nach unten weisenden Randsteg 16b bzw. 17b, von denen der Verbindungsbereich von oben liegendem Seitensteg 12a und dessen Randflansch 13 einerseits bzw. die bodenstegferne Stirnfläche der Verlängerung 19 des unteren Randflansches 18 andererseits übergriffen werden.

Im Bodensteg 11 sind längs dessen Flächenmittellängslinie Durchgangslöcher 1 in einem gleichbleibenden Abstand, d. h. mit gleichbleibender Lochteilung, angeordnet. Das dem Profilende nächstgelegene Loch 1 weist dabei einen Abstand vom Profilende von der Größe der halben Lochteilung auf. Längsholmprofile dieser Art können mit ihren Stirnseiten aneinandergestoßen und über jeweil seine einfache und gewichtsmäßig leichte Blechlasche miteinander verbunden werden, welche entsprechende Löcher gleicher Lochteilung aufweist.

**Patentansprüche**

1. Aus durch Verschraubungen zusammengehaltenen Längsholmen und Querstreben gebildeter Rahmen für Bandfördervorrichtungen, dessen Längsholme jeweils als zur Bandmitte offene Profile etwa C-förmigen Querschnitts (10) mit einem Bodensteg (11) und mit sich von dessen beiden Seiten weg erstreckenden Seitenstegen (12a, 12b) ausgebildet sind und Aufnahmen für das Förderband bilden, dadurch gekennzeichnet, daß die Seitenstege (12a, 12b) jeweils zueinander gerichtete Randflansche (13, 18) aufweisen, wobei die unteren Randflansche (18) je eine horizontale, zur Bandmitte gerichtete Verlängerung (19) aufweisen, und daß diese Verlängerungen (19) voneinander beabstandet und unverbunden sind, wodurch das Untertrum von unten über die gesamte Rahmenlänge frei zugänglich ist.

2. Rahmen nach Anspruch 1, dadurch gekennzeichnet, daß die Verlängerung (19) des unteren Randflansches (18) durch eine Abkröpfung desselben gebildet wird.

3. Rahmen nach Anspruch 1, dadurch gekennzeichnet, daß die Verlängerung (19) des unteren Randflansches (18) durch eine an diesem lösbar festlegbare Führungsleiste gebildet wird.

4. Rahmen nach einem der vorhergehenden Ansprüche, dadurch gekennzeichnet, daß eine auf der dem oberen Seitensteg (12a) zugewandten Seite der Verlängerung (19) des unteren Randflansches (18) angeordnete Gleitleiste (17) vorgesehen ist.

5. Rahmen nach einem der vorhergehenden Ansprüche, dadurch gekennzeichnet, daß auf der vom unteren Seitensteg (12b) abgewandten Seite des oberen Seitenstegs (12a) eine Gleitleiste (16) angeordnet ist.

6. Rahmen nach Anspruch 4 oder 5, <u>dadurch gekennzeichnet, daß</u> die Gleitleiste (17 bzw. 16) auf ihrer bodenstegnahen Seite einen hochstehenden Führungssteg (17a bzw. 16a) aufweist.

7. Rahmen nach einem der vorhergehenden Ansprüche 4 bis 6, <u>dadurch gekennzeichnet, daß</u> die Gleitleiste (17 bzw. 16) auf ihrer bodenstegfernen Seite einen die bodenstegferne Stirnfläche der Verlängerung (19) des unteren Randflansches (18) bzw. den Übergangsbereich zwischen dem oberen Seitensteg (l2a) und dessen Randflansch (13) übergreifenden Randsteg (17b bzw. 16b) aufweist.

8. Rahmen nach einem der vorhergehenden Ansprüche 4 bis 7, <u>dadurch gekennzeichnet, daß</u> die Gleitleiste (17 bzw. 16) aus Kunststoff, vorzugsweise aus Polytetrafluoräthylen, gebildet ist.

9. Rahmen nach einem der vorhergehenden Ansprüche, <u>dadurch gekennzeichnet, daß</u> die Randflansche (13 bzw. 18) jeweils zum zugehörigen Bodensteg (11) hin geneigt sind.

10. Rahmen nach Anspruch 9, <u>dadurch gekennzeichnet, daß</u> die Neigung der Randflansche (13 bzw. 18) bis etwa 30° aus der Parallelen (p) zum Bodensteg (11) beträgt.

slide-bar (16) on the side of the upper side web (12a) averted from the lower side web (12).

6.) Frame according to claims 4 or 5, <u>characterized in that</u> the slide-bar (17 or 16, respectively) on its side near to the central web is provided with a guideweb (17a or 16a, respectively) extending upright.

7.) Frame according to anyone of the preceding claims 4 to 6, <u>characterized in that</u> the slide-bar (17 or 16, respectively) on its side averted from the central web is provided with a marginal web (17b or 16b, respectively) overlapping the front surface of the extension (19) of the lower marginal flange (18) averted from the central web or overlapping the transition range between the upper side web (12a) and the marginal flange (13).

8.) Frame according to anyone of the preceding claims 4 to 7, <u>characterized in that</u> the slide-bar (17 or 16, respectively) is formed from plastics material, preferably from polytetrafluorethilene.

9.) Frame according to anyone of the preceding claims, <u>characterized in that</u> the marginal flanges (13 and 18, respectively) are sloping towards the associated central web (11).

10.) Frame according to claim 9, <u>characterized in that</u> the slope of the marginal flanges (13 and 18, respectively), amount up to 30° from the plane (p) parallel to the central web (11).

## Claims

1.) Frame for band or belt, respectively, conveyors formed from longitudinal bars and cross trussings assembled by screwed joints, the longitudinal bars of which are formed as open profile sections of substantially C-like cross section (10) with a central web (11) and side webs (12a, 12b) extending from both sides of same and form supporting parts for the conveying band or belt, respectively, <u>characterized in that</u> either side web (12a, 12b) is provided with marginal flanges (13, 18) directed to each other, each of the lower marginal flanges (18) being provided with a horizontal extension (19) directed to the band or belt, respectively, center, and in that these extensions (19) are arranged in distance to other and unconnected with each other, whereby the lower run over the entire length of the frame is freely accessible from the downside.

2.) Frame according to claim 1, <u>characterized in that</u> the extension (19) of the lower marginal flange (18) is formed by an offset of same.

3.) Frame according to claim 1, <u>characterized in that</u> the extension (19) of the lower marginal flange (18) is formed by a guiding ledge disengageably fastenable to same.

4.) Frame according to anyone of the preceding claims, characterized in that there is provided a slide-bar (17) arranged on this side of the extension (19) of the lower marginal flange (18) facing the upper side web (12a).

5.) Frame according to anyone of the preceding claims, <u>characterized in that</u> there is arranged a

## Revendications

1. Châssis pour systèmes de convoyage constitués par des longerons et des traverses assemblés par boulonnage les uns aux autres, les longerons étant chacun constitués par un profilé ouvert vers le milieu de la bande transporteuse, de section grossièrement en C (10), possédant un fond (11) et des faces latérales (12a, 12b) partant des deux côtés et servant d'éléments de réception de la bande transporteuse, <u>caractérisé par le fait que</u> les ailes latérales (12a, 12b) présentent chacune des brides rabattues (13, 18) dirigées l'une vers l'autre, la bride rabattue inférieure (18) ayant un prolongement horizontal (19) dirigé vers le milieu de la bande transporteuse, et par le fait que ces prolongements (19) sont distants l'un de l'autre et non assemblés, permettant ainsi le libre accès par le bas au brin inférieur, sur toute la longueur du châssis.

2. Châssis selon revendication 1, <u>caractérisé par le fait que</u> le prolongement (19) de la bride rabattue inférieure (18) est constituée par une partie coudée de celle-ci.

3. Châssis selon revendication 1, <u>caractérisé par le fait que</u> le prolongement (19) de la bride rabattue inférieure (18) est constituée par une garniture de guidage adaptée amovible sur ladite bride.

4. Châssis selon l'une des revendications précédentes, <u>caractérisé par le fait qu'</u>une garniture de glissement (17) est prévue sur la face du prolongement (19) de la bride rabattue (18) dirigée vers l'aile latérale supérieure (12a).

5. Châssis selon l'une des revendications précédentes, <u>caractérisé par le fait qu'</u>une garniture de glissement (18) est montée sur la face de l'aile latérale supérieure (12a) opposée à l'aile latérale inférieure (12b).

6. Châssis selon revendications 4 ou 5, <u>caractérisé par le fait que</u> la garniture de glissement (17 ou 16) présente un rebord de guidage (17a ou 16a) relevé du côté proche du fond de profilé.

7. Châssis selon l'une des revendications précédentes 4 à 6, <u>caractérisé par le fait que</u> la garniture de glissement (17 ou 16) présente sur le côté éloigné du fond un rebord (17b ou 16b) recouvrant la face frontale éloignée du fond du prolongement (19) de la bride rabattue inférieure (18) ou bien la zone de transition entre l'aile latérale supérieure (12a) et sa bride rabattue (13).

8. Châssis selon l'une des revendications précédentes 4 à 7, <u>caractérisé par le fait que</u> la garniture de glissement (17 ou 16) est en matière plastique, de préférence en polytétrafluoréthylène.

9. Châssis selon l'une des revendications précédentes, <u>caractérisé par le fait que</u> la bride rabattue (13 ou 18) est inclinée vers la partie correspondante du fond de profilé (11).

10 Châssis selon revendication 9, <u>caractérisé par le fait que</u> l'inclinaison de la bride rabattue (13 ou 18) forme avec la parallèle (p) au fond (11) un angle pouvant avoir jusqu'à env. 30°.